# EUROPÄISCHE PATENTANMELDUNG

(11) **EP 1 666 194 A2**
(43) Veröffentlichungstag der Anmeldung: **07.06.2006**
(21) Anmeldenummer: 05026078.5
(22) Anmeldetag: 30.11.2005
(51) Int. Cl.: B23P 19/04

(54) **Vorrichtung zum Montieren von Bauteilen**

(30) Priorität: 03.12.2004 DE 102004058385
(71) Anmelder: Alfing Montagetechnik GmbH, 73433 Aalen (DE)
(72) Erfinder: Nigmann, Horst, 73460 Hüttlingen (DE); Stifter, Franz, 73463 Westhausen (DE)
(74) Vertreter: HOFFMANN EITLE

(57) **Zusammenfassung**

Eine Vorrichtung (10) zum Montieren von Bauteilen (3) an einem Werkstück (1) ist mit mindestens drei Werkzeugspindeln (12a-12f) ausgestattet, deren Längsachsen sich parallel zueinander erstrecken, wobei zumindest einige (12b-12f) der Werkzeugspindeln bezüglich der verbleibenden Werkzeugspindeln (12a-12f) verschieblich gelagert sind. Eine Antriebseinrichtung (30) dient zum Erzeugen einer Antriebsbewegung. Eine Verstelleinrichtung wandelt diese Antriebsbewegung in eine Verschiebung jeder verschieblich gelagerten Werkzeugspindeln (12b-12f) um, bei welcher Verschiebung sich die Abstände (a) zwischen jeweils zwei benachbarten Werkzeugspindeln (12a-12f) um denselben Betrag ändern.

## Beschreibung

### Technisches Gebiet

Die vorliegende Erfindung betrifft eine Vorrichtung zum Montieren von Bauteilen an einem Werkstück.

In der Montagetechnik stellt sich häufig die Aufgabe, Montageteile in in einem Werkstück ausgebildete Ausnehmungen einzupressen. So werden beispielsweise bei der Montage von Zylinderköpfen für Verbrennungskraftmaschinen Ventilsitzringe und Ventilführungen in dafür vorgesehene Aufnahmen des Zylinderkopfes eingepresst.

Der Zylinderkopf zählt zu den kompliziertesten Gussteilen am Kraftfahrzeug. Reihenmotoren und 15°-V-Motoren haben nur einen Zylinderkopf, alle anderen Bauformen mindestens zwei. In aller Regel werden Zylinderköpfe aus einer Aluminiumlegierung hergestellt. Sie unterliegen bei ihrer Fertigung einem hohen mechanischen Bearbeitungs- und Montageaufwand. Dessen größter Teil entfällt auf die Gaswechselventile mit allen zugehörigen Bauteilen.

Diese Gaswechselventile sind Ein- und Auslassventile, die den Verbrennungsraum abdichten und den Gaswechsel im Motor steuern. Bei einem Zylinderkopf mit Vierzylindertechnik sind für jeden Zylinder der Verbrennungskraftmaschine vier Gaswechselventile im Zylinderkopf vorgesehen, und zwar zwei Einlass- und zwei Auslassventile. Diese Ventile umfassen jeweils einen Ventilteller und einen Ventilstößel, der verschiebbar in einer Bohrung im Zylinderkopf sitzt, wobei der Ventilteller mit einem Ventilsitz am Eingang der Bohrung in Eingriff gelangen kann, um die Einlass- und Auslassöffnungen zur Zylinderkammer zu öffnen und zu schließen.

Für jedes Ventil ist eine Ventilführung vorgesehen, die dazu dient, den Ventilstößel in seiner Bewegung zu führen. Sie hat die Aufgabe, die Seitenkräfte aufzunehmen, welche auf den Ventilstößel wirken. Die Ventilführung zentriert das Ventil auf dem Ventilsitz und leitet einen Teil der Wärme vom Ventilkopf über den Ventilstößel zum Zylinderkopf ab.

Ventilsitzringe werden in den Zylinderkopf eingesetzt, um verschleißfeste Auflageflächen für die Ventilteller bereitzustellen.

Die Ventilsitzringe und Ventilführungen werden nach vorheriger Bearbeitung und eventuell Erwärmung der entsprechenden Einbaustellen im Zylinderkopf unterkühlt eingepresst. Sie werden dann im Zylinderkopf durch einen Presssitz in ihrer Position gehalten. Die Ventilführungen und Ventilsitzringe werden beim Einpressen in die Gehäusebohrung des Zylinderkopfs radial eingeschnürt. Die Gehäusebohrung hingegen wird aufgeweitet.

Die korrekte Montage von Ventilsitzringen und Ventilführungen ist entscheidend für die einwandfreie Arbeitsweise eines Zylinderkopfs.

### Stand der Technik

Die oben erwähnten Ventilsitzringe und Ventilführungen werden beispielsweise hydraulisch in die entsprechenden Gehäusebohrungen des Zylinderkopfes eingepresst. Es gibt aber auch elektrisch betätigte Einpress-Spindeln zum Einpressen der Montageteile.

Ein Verfahren zum Einpressen von Ventilsitzringen in Gehäusebohrungen von Zylinderköpfen ist aus der DE 40 29 881 C2 bekannt.

Eine Vorrichtung zum Eindrücken einer Führungsbuchse eines Ventils in eine Zylinderkopfbohrung ist aus der US 1,468,777 bekannt. DE 39 90 985 C2 beschreibt eine Weiterbildung dieser Vorrichtung.

Eine weitere Vorrichtungen zum Einpressen von Ventilsitzringen und Ventilführungen ist im Deutschen Gebrauchsmuster DE 202 16 310 U1 beschrieben. Die dort offenbarte Vorrichtung zum Einpressen eines Ventilsitzrings in eine Ausnehmung eines Zylinderkopfes weist eine Presspinole auf, an der der einzupressende Ventilsitzring fixierbar ist.

Bei Vorrichtungen wie der dort offenbarten wird die Presspinole oder Einpress-Spindel zum Einpressen der Ventilsitzringe bzw. Ventilführungen in die Gehäusebohrungen des Zylinderkopfes relativ zu dem Zylinderkopf bewegt, um diese Montageteile nacheinander in alle vorhandenen Gehäusebohrungen einzupressen.

Es sind darüber hinaus auch Vorrichtungen bekannt, die mehrere Einpress-Spindeln aufweisen, die gleichzeitig betätigbar sind. So können mehrere Montageteile gleichzeitig in nebeneinander vorgesehene Gehäusebohrungen eines Zylinderkopfes eingepresst werden. Der Abstand zwischen jeweils zwei Einpress-Spindeln entspricht dabei dem Abstand zwischen den einzelnen Zylindern der Verbrennungskraftmaschine. Bei Sechszylinder-Motoren beträgt dieser Abstand beispielsweise stets 91 mm, bei einem V-Motor dagegen 98 mm. Für verschiedene Arten von Motoren sind daher verschiedene Einpressvorrichtungen mit dem jeweils passenden Abstand zwischen den einzelnen Einpress-Spindeln erforderlich.

Auch bei solchen Vorrichtungen mit zwei oder drei Einpress-Spindeln ist es außerdem nach wie vor notwendig, die Spindeln relativ zu dem Zylinderkopf zu verfahren, um die Montageteile nacheinander in alle vorhandenen Gehäusebohrungen eines Zylinderkopfes für einen Vielzylindermotor - beispielsweise einen Sechs-, Acht- oder Zwölfzylindermotor - einzupressen.

Daneben sind auch Vorrichtungen mit sechs Einpress-Spindeln bekannt, mit der sechs Montageteile gleichzeitig in Gehäusebohrungen eines Zylinderkopfes eingepresst werden können. Auch bei dieser Vorrichtung sind die Spindeln in einem festen Abstand von beispielsweise 91 oder 98 mm angeordnet. Auch hier sind demnach verschiedene Vorrichtungen für das Einpressen der Montageteile in verschiedene Arten von Zylinderköpfen notwendig.

Aus der DE 27 39 534 C2 ist eine Werkzeugwechselvorrichtung bekannt. Hier haben Werkzeuge in einem Speicher einen anderen Abstand voneinander als in einer Aufnahme von Arbeitsspindeln. Um dies auszugleichen, sind Werkzeugwechslerschlitten vorgesehen, die in ihrem Abstand zueinander veränderlich sind. Es sind demnach nicht die Werkzeugspindeln, deren Abstand verändert wird, sondern die Werkzeugwechselschlitten.

DE 695 10 632 T2 offenbart eine Vorrichtung zur automatischen Bestückung der Ventilsitze einer Brennkraftmaschine mit den entsprechenden Ventilen. Hier sind Greifelemente zum Greifen von Ventilen an Gleitelementen gelagert, welche ihrerseits über eine Pantographenverbindung miteinander verbunden sind. Als Ergebnis der von der Pantographenverbindung gebildeten Verbindung bewirkt jede Bewegung eines Endgleitelements entlang einer Führung bezüglich eines fixierten Gleitelements automatisch eine Positionierung zweier Gleitelemente in gleichmäßigen Intervallen.

### Darstellung der Erfindung

Der vorliegenden Erfindung liegt die Aufgabe zugrunde, eine Vorrichtung zum Montieren von Bauteilen an einem Werkstück zu schaffen, die flexibler an verschiedene Arten von zu bestückenden Werkstücken angepasst werden kann.

Diese Aufgabe löst eine Vorrichtung gemäß dem Patentanspruch 1.

Demzufolge sind mindestens drei Werkzeugspindeln vorgesehen, mittels denen die Bauteile an dem Werkstück montiert werden und deren Längsachsen sich parallel zueinander erstrecken, wobei zumindest einige der Werkzeugspindeln bezüglich der verbleibenden Werkzeugspindeln verschieblich gelagert sind. Eine Antriebseinrichtung dient zum Erzeugen einer Antriebsbewegung. Erfindungsgemäß ist eine Verstelleinrichtung vorgesehen, die eine Verstellspindel aufweist und diese Antriebsbewegung in eine Verschiebung jeder verschieblich gelagerten Werkzeugspindel umwandelt, bei welcher Verschiebung sich die Abstände zwischen jeweils zwei benachbarten Werkzeugspindeln um denselben Betrag ändern.

Die Verstelleinrichtung mit der Verstellspindel vervielfacht die von der Antriebseinrichtung erzeugte Bewegung, so dass die Abstände zwischen allen Werkzeugspindeln gleichmäßig anwachsen. Die Verstellspindel ermöglicht eine besonders genaue Anpassung der Abstände zwischen den einzelnen Werkzeugspindeln, während der Montageaufwand der Verstelleinrichtung gleichzeitig recht gering ist.
Der Abstand zwischen den Werkzeugspindeln kann somit so eingestellt werden, dass er dem Abstand zwischen den Montagepositionen des zu bestückenden Werkstücks entspricht. Dadurch wird es möglich, verschiedene Typen von Werkstücken, die sich hinsichtlich der Abstände zwischen den Montagepositionen unterscheiden, mittels einer und derselben Vorrichtung zu bestücken.

Beispielsweise können Ventilsitzringe und Ventilführungen mittels der verstellbaren Werkzeugspindeln der erfindungsgemäßen Vorrichtung in Gehäusebohrungen verschiedener Zylinderköpfe eingepresst werden, die sich hinsichtlich des Abstands zwischen den einzelnen Zylindern unterscheiden. Der Abstand zwischen jeweils zwei benachbarten Einpress-Spindeln kann zum Beispiel auf 91 mm eingestellt werden, um Ventilsitzringe in Sechszylinderköpfe einzupressen, und anschließend auf 98 mm vergrößert werden, um Ventilsitzringe in V-Zylinderköpfe einzupressen.

Die Vorrichtung ist damit insbesondere zum Einpressen von Montageteilen in der Großserienfertigung geeignet; die Erfindung ist aber nicht auf dieses Gebiet beschränkt.

Vorteilhafte Weiterbildungen der erfindungsgemäßen Vorrichtung sind in den abhängigen Ansprüchen beschrieben.

Die Verschiebung, vorzugsweise lineare Verschiebung, der verschieblich gelagerten Werkzeugspindeln erfolgt vorzugsweise stufenlos, so dass die Abstände zwischen den Werkzeugspindeln exakt an die Abstände zwischen den Montagepositionen angepasst werden können.

Vorzugsweise findet die Verschiebung aller verschieblichen Werkzeugspindeln gleichzeitig statt. Wenn es die konstruktiven Gegebenheiten erfordern, kann die Verschiebung der einzelnen Werkzeugspindeln aber beispielsweise auch paarweise nacheinander erfolgen.

Die Antriebsbewegung kann eine Rotationsbewegung und/oder eine translatorische Bewegung sein, die die Verstelleinrichtung in die Verschiebung der verschieblich gelagerten Werkzeugspindeln umwandelt. Diese Rotationsbewegung wird mittels der besagten Verstellspindel in die Verschiebung der verschieblich gelagerten Werkzeugspindeln umgewandelt.

Der Abstand zwischen jeweils zwei benachbarten Werkzeugspindeln kann beispielsweise zwischen 88 mm und 105 mm einstellbar sein; bei diesen Maßen handelt es sich um die gegenwärtig geltende Mindest- und Höchstgrenze für den Abstand zwischen zwei Zylindern eines Motors.

Zum Verstellen des Abstands zwischen den Werkzeugspindeln kann eine Werkzeugspindel, z.B. eine außen oder eine in der Mitte angeordnete, stationär und die übrigen verschieblich gelagert sein. Es ist aber auch denkbar, alle vorhandenen Werkzeugspindeln zu verschieben.

Die Anzahl der Werkzeugspindeln richtet sich nach dem anvisierten Einsatzzweck; beispielsweise können vier, sechs, acht oder zwölf Spindeln zur Bestückung von Vier-, Sechs-, Acht- oder Zwölfzylinderköpfen vorhanden sein.

Die verschieblichen Werkzeugspindeln können auf jeweils einem Schlitten gelagert sein.

Jede verschieblich gelagerte Einpress-Spindel kann auf zwei Führungsschienen verschieblich sein. In diesem Fall kann insbesondere jeder Schlitten auf jeweils zwei Führungsschienen gelagert sein.

Die Werkzeugspindeln können als Einpress-Spindeln zum Einpressen von Ventilsitzringen oder Ventilführungen in Zylinderköpfe ausgestaltet sein; die Erfindung ist aber auch auf alle anderen Arten von Werkzeugspindeln anwendbar, die in irgendeiner Form zur Montage von Bauteilen an Werkstücken einsetzbar sind.

In einer vorteilhaften Weiterbildung der Erfindung sind verschiedene Außengewindebereiche der Verstellspindel jeweils einer verschieblich gelagerten Werkzeugspindel zugeordnet. Die Außengewindebereiche haben unterschiedliche Durchmesser und Steigungen, die die gleichmäßige Verschiebung der Werkzeugspindeln bewirken. Die Außengewindebereiche der Verstellspindel können dann mit Innengewinden von Schlitten im Eingriff sein, an denen die verschieblichen Werkzeugspindeln gelagert sind.

### Kurze Beschreibung der Zeichnungen

Die Erfindung wird im folgenden anhand eines in den anliegenden Zeichnungen dargestellten Ausführungsbeispiels genauer beschrieben, in denen
- Fig. 1: eine Querschnittsansicht einer in einem Zylinderkopf ausgebildeten Gehäusebohrung mit darin angeordnetem Ventilsitzring ist,
- Fig. 2: eine Draufsicht einer Ausführungsform einer erfindungsgemäßen Vorrichtung zum Montieren von Bauteilen an einem Werkstück ist, und
- Fig. 3: eine Seitenansicht dieser Ausführungsform einer erfindungsgemäßen Vorrichtung zum Montieren von Bauteilen an einem Werkstück ist, und
- Fig. 4: eine Verstellspindel der in Fig. 2 und 3 gezeigten erfindungsgemäßen Vorrichtung zeigt.

### Ausführliche Beschreibung von bevorzugten Ausführungsformen der Erfindung

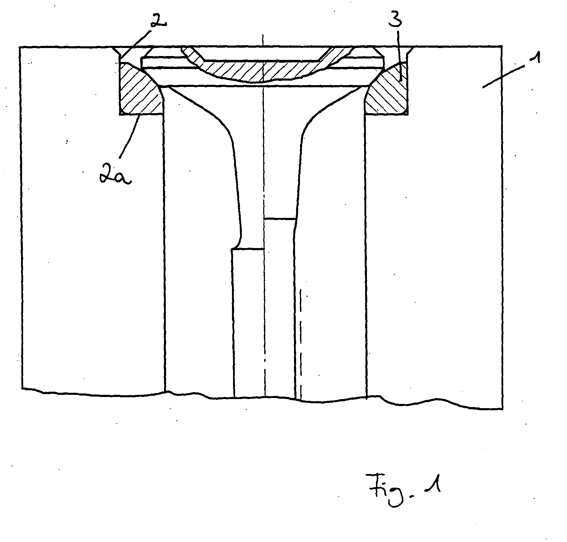

Mit Bezug auf die anliegenden Figuren 1 bis 4 wird nun eine Vorrichtung zum Einpressen von Ventilsitzringen in Gehäusebohrungen eines Zylinderkopfs, als Beispiel für eine erfindungsgemäße Vorrichtung zum Montieren von Bauteilen an einem Werkstück, beschrieben.

Figur 1 zeigt zunächst eine in einem Zylinderkopf 1 ausgebildete Gehäusebohrung 2 mit darin angeordnetem Ventilsitzring 3. Zum Einpressen des Ventilsitzrings 3 in die Gehäusebohrung 2 dient die nachfolgend beschriebene, erfindungsgemäße Vorrichtung.

Die korrekte Montage des Ventilsitzrings 3 ist entscheidend für die einwandfreie Arbeitsweise des Zylinderkopfs 1. Insbesondere müssen die Ventilsitzringe 3 bis auf den Grund 2a der Gehäusebohrung 2 eingepresst werden und dürfen sich nicht erst während des Betriebs nachsetzen.

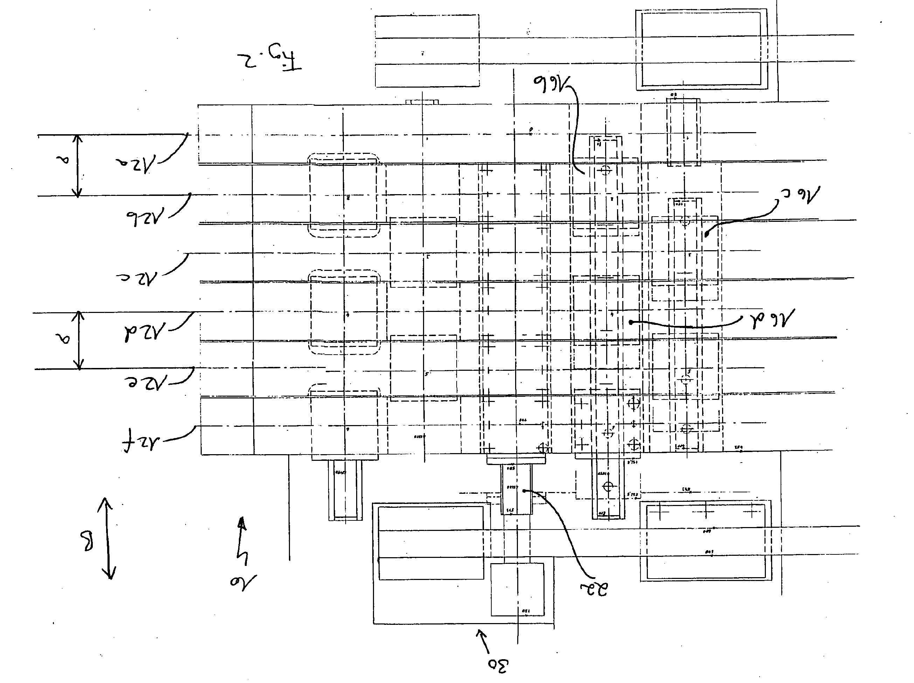

Dies wird mittels der in den Figuren 2 bis 4 gezeigten Einpressvorrichtung 10 erreicht.

Die Einpressvorrichtung 10 hat in der dargestellten Ausführungsform sechs Einpress-Spindeln 12 (auch als Einpress-Pinolen oder Einpress-Dorne bezeichnet). Deren Anordnung ergibt sich am besten aus Figur 2. Die Längsachsen der sechs Einpress-Spindeln 12a bis 12f erstrecken sich parallel zueinander, und mittels der sechs Einpress-Spindeln 12a bis 12f können sechs Ventilsitzringe 3 gleichzeitig in einen Zylinderkopf 1 (in den Figuren 2 bis 4 nicht dargestellt) eingepresst werden, und zwar auf an sich bekannte Art und Weise und mit einer Presskraft von beispielsweise zwischen 300 und 1000 kp.

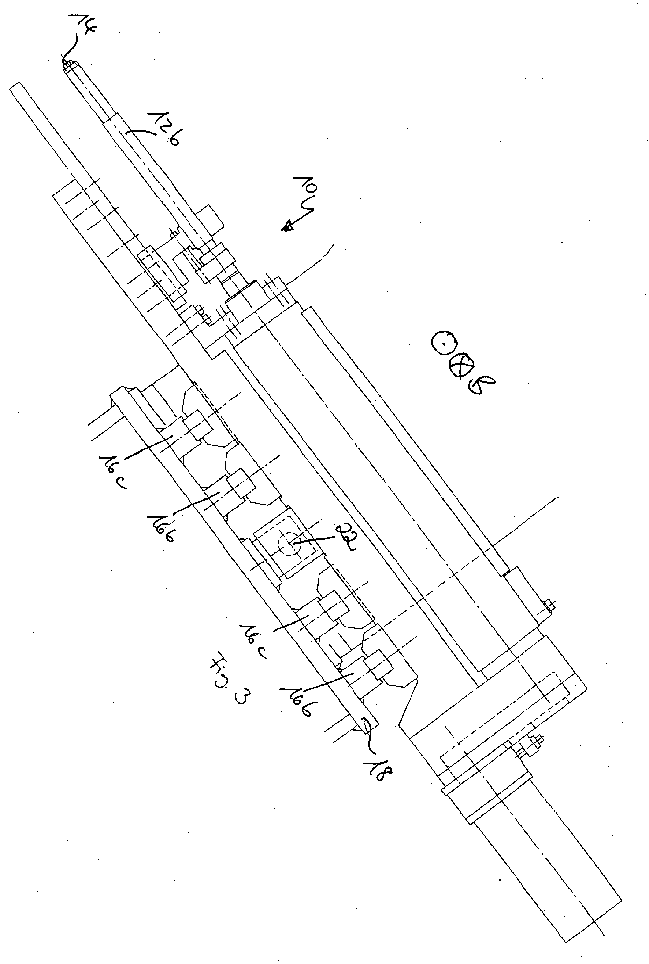

In der Seitenansicht der Figur 3 ist nur eine der sechs Einpress-Spindeln, nämlich die zweite Einpress-Spindel 12b, zu sehen, die vier weitere Einpress-Spindeln 12c-12f verdeckt, welche voneinander beabstandet dahinter angeordnet sind (vgl. wiederum auch Figur 2).

Zum Einpressen der Bauteile ist jede Einpress-Spindel 12 an ihrer Spitze mit einer Aufnahme 14 für den einzupressenden Ventilsitzring 3 versehen. Mittels eines an sich bekannten und daher hier nicht genauer beschriebenen Antriebs und Stellmechanismus' wird die Bewegung der Einpress-Spindeln 12 entlang ihrer Längsachsen, d.h. in Rechts-Links-Richtung in Figur 2 und 3, realisiert, um die einzupressenden Montageteile in die (in den Figuren 2 bis 4 nicht dargestellten) Gehäuseöffnungen des Werkstücks einzubringen und einzupressen.

Erfindungsgemäß ist der Abstand a zwischen den sechs Einpress-Spindeln 12a bis 12f veränderlich, um Zylinderköpfe mit unterschiedlichen Abständen zwischen den einzelnen Zylindern mit ein und derselben Einpressvorrichtung 10 bestücken zu können.

Dazu können die Einpress-Spindeln 12 rechtwinklig zur Erstreckung ihrer Längsachse linear verschoben werden. Die Richtung dieser Verschiebung ist in den Figuren 2 bis 4 durch einen Pfeil B gekennzeichnet. Dabei bleibt die erste Einpress-Spinde1 12a stationär, und die verbleibenden fünf Einpress-Spindeln 12b bis 12f werden bezüglich der stationären Einpress-Spindel 12a verschoben, so dass sich der Abstand a zwischen den Einpress-Spindeln 12a bis 12f ändert.

Bei dieser Bewegung wird jede Einpress-Spindel mittels zweier Führungen geführt. Beispielsweise sind für die in Figur 3 dargestellte Einpress-Spindel 12b zwei Führungen 16b vorhanden, über die sie an einem Gestell 18 gelagert ist. In Figur 3 sind auch die Führungen 16c für die dritte, hinter der dargestellten Einpress-Spindel 12b angeordnete Einpress-Spindel 12c zu sehen, die bezüglich der Führungen 16b versetzt sind. Die Führungen für die darauffolgende, vierte Einpress-Spindel 12d befinden sich wiederum direkt hinter den Führungen 16b (siehe auch Figur 2). Durch die versetzte Anordnung der Führungen können die Einpress-Spindeln näher aneinander angeordnet werden.

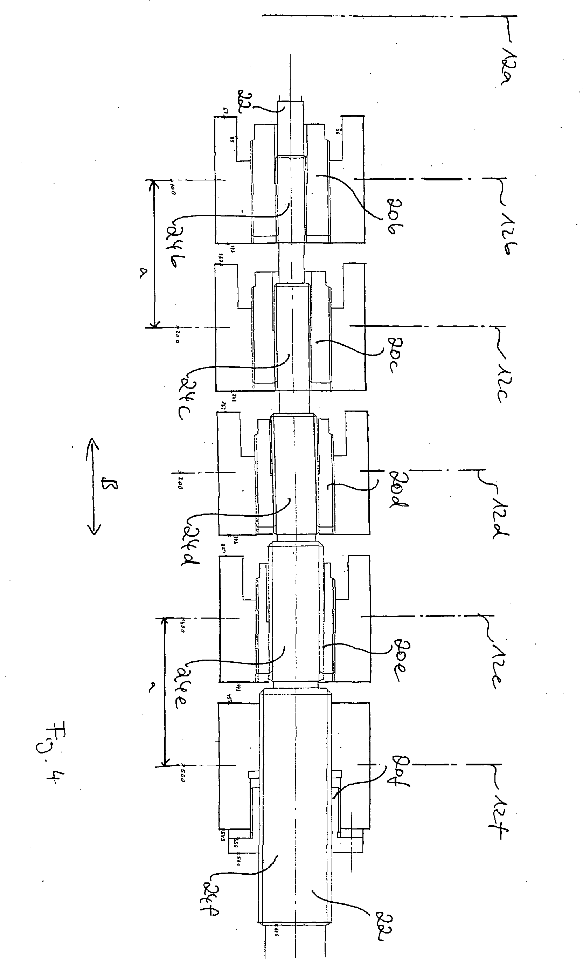

Der Abstand a zwischen den einzelnen Einpress-Spindeln wird in dieser Ausführungsform mit Hilfe einer Verstelleinrichtung verstellt, die eine Verstellspindel aufweist. Die Verstellspindel ist in den Figuren 2 bis 4 mit dem Bezugszeichen 22 bezeichnet. Sie hat fünf Außengewindebereiche 24b bis 24f für die fünf verschiebbaren Verstellspindeln 12b bis 12f (die Verstellspindel 12a bleibt in der hier beschriebenen Ausführungsform stationär). Jeder der Außengewindebereiche 24b bis 24f der Verstellspindel 22 ist im Eingriff mit einem in einem Schlitten 20b bis 20f ausgebildeten Innengewinde. Die Schlitten 20b bis 20f dienen wiederum zur Lagerung der Einpress-Spindeln 12b bis 12f, die in Figur 4 nur sehr schematisch angedeutet sind. Die Einpress-Spindeln 12b bis 12f sind an den jeweiligen Schlitten 20b bis 20f mittels Stellmuttern justiert.

Eine Drehung der Verstellspindel 22 mittels einer geeigneten Antriebseinrichtung (Bezugsziffer 30 in Figur 2) bewirkt über den Eingriff ihrer Außengewindebereiche 24b bis 24f mit den Schlitten 20b bis 20f eine Verschiebung der Schlitten 20b bis 20f in Richtung des Pfeils B und somit eine Veränderung des Abstands a zwischen den Einpress-Spindeln 12a bis 12f. Die Gewindesteigungen der fünf Außengewindebereiche 24b bis 24f der Verstellspindel 22 sind nun so ausgestaltet, dass jeder der Schlitten 20b bis 20f bei einer Drehung der Verstellspindel 22 absolut gesehen um eine Strecke verschoben wird, die der Strecke entspricht, um die der jeweils vorangehende Schlitten 20a bis 20e verschoben wird, zuzüglich der gewünschten Abstandsänderung zwischen jeweils zwei Schlitten. Dies bewirkt, dass sich die Abstände a zwischen jeweils zwei benachbarten Verstellspindeln 12 in gleichem Maße ändern.

Beispielsweise kann der Abstand a zwischen jeweils zwei benachbarten Einpress-Spindeln 12a bis 12f von 91 mm auf 98 mm verstellt werden, wenn statt eines Zylinderkopfes für einen Sechszylindermotor mit einem Abstand a von 91 mm zwischen zwei Zylindern nun ein Zylinderkopf für einen V-Motor bearbeitet werden soll, bei dem der Abstand a zwischen zwei Zylindern 98 mm beträgt.

Dazu wird die Verstellspindel 22 so weit verdreht, bis sich der zweite Schlitten 20b mit der zweiten Spindel 12b um 7 mm (um die Differenz zwischen 98 und 91 mm) weiter von der ersten Einpress-Spindel 12a entfernt, d.h. nach rechts in Figur 3 bewegt hat, bis er also um 98 mm von der ersten, stationären Spindel 12a beabstandet ist.

Aufgrund der unterschiedlichen Gewindesteigungen der Außengewindebereiche 24a der Verstellspindel bewirkt eine solche Drehung gleichzeitig auch, dass sich der dritte Schlitten 20c mit der dritten Spindel 12c um 7 + 7 mm = 14 mm weiter von der ersten, stationären Spindel 12a entfernt, anschließend also 98 mm vom zweiten Schlitten 20b beabstandet ist. Der vierte Schlitten 20d mit der vierten Spindel 12d entfernt sich gleichzeitig um 14 + 7 mm = 21 mm weiter von der ersten Spindel 12a, ist anschließend also 98 mm vom dritten Schlitten 20c beabstandet, und so weiter.

So wachsen die Abstände a zwischen jeweils zwei benachbarten Spindeln 12a bis 12f mit der Drehung der Verstellspindel 22 gleichzeitig um jeweils den gleichen Betrag, im Beispiel um jeweils 7 mm auf jeweils 98 mm.

Die Erfindung ist nicht auf die oben beschriebenen Ausführungsformen beschränkt, sondern kann im Bereich der anliegenden Patentansprüche variiert werden.

Mit einer alternativen Ausgestaltung der Verstellspindel ist es z.B. möglich, beispielsweise eine in der Mitte angeordnete Einpress-Spindel stationär zu halten und die rechts und links davon angeordneten zu verschieben, um den Abstand zwischen den Werkzeugspindeln gleichmäßig zu ändern.

Die erfindungsgemäßen Vorrichtungen können, wie oben beschrieben, als Werkzeugspindeln Einpress-Spindeln aufweisen und zum Einpressen von Ventilsitzringen oder Ventilführungen in Zylinderköpfe verwendet werden. Die Erfindung deckt aber auch anders geartete Werkzeugspindeln für alle denkbaren Fügevorgänge ab.

## Patentansprüche

1. Vorrichtung (10) zum Montieren von Bauteilen (3) an einem Werkstück (1), mit:
mindestens drei Werkzeugspindeln (12a-12f), mittels denen die Bauteile (13) an dem Werkstück (1) montiert werden, wobei sich die Längsachsen der Werkzeugspindeln (12a-12f) parallel zueinander erstrecken, und wobei zumindest einige (12b-12f) der Werkzeugspindeln bezüglich der verbleibenden Werkzeugspindeln (12a-12f) verschieblich gelagert sind,
einer Antriebseinrichtung (30) zum Erzeugen einer Antriebsbewegung, und
einer Verstelleinrichtung, die diese Antriebsbewegung in eine Verschiebung jeder verschieblich gelagerten Werkzeugspindel (12b-12f) umwandelt, bei welcher Verschiebung sich die Abstände (a) zwischen jeweils zwei benachbarten Werkzeugspindeln (12a-12f) um denselben Betrag ändern,
wobei die Verstelleinrichtung eine Verstellspindel (22) aufweist.

2. Vorrichtung (10) nach Anspruch 1, bei welcher die Verschiebung der verschieblich gelagerten Werkzeugspindeln (12b-12f) stufenlos erfolgt.

3. Vorrichtung (10) nach Anspruch 1 oder 2, bei welcher die Verschiebung aller verschieblichen Werkzeugspindeln (12b-12f) gleichzeitig stattfindet.

4. Vorrichtung (10) nach einem der Ansprüche 1 bis 3, bei welcher die Antriebsbewegung eine Rotationsbewegung ist, die die Verstelleinrichtung in die Verschiebung der verschieblich gelagerten Werkzeugspindeln (12b-12f) umwandelt.

5. Vorrichtung (10) nach einem der Ansprüche 1 bis 4, bei welcher die Antriebsbewegung eine translatorische Bewegung ist, die die Verstelleinrichtung in die Verschiebung der verschieblich gelagerten WerkzeugSpindeln (12b-12f) umwandelt.

6. Vorrichtung (10) nach einem der vorangehenden Ansprüche, bei welcher der einstellbare Abstand (a) zwischen jeweils zwei benachbarten Werkzeugspindeln (12a-12f) mindestens 88 mm beträgt.

7. Vorrichtung (10) nach einem der vorangehenden Ansprüche, bei welcher der einstellbare Abstand (a) zwischen jeweils zwei benachbarten Werkzeugspindeln (12a-12f) höchstens 105 mm beträgt.

8. Vorrichtung (10) nach einem der vorangehenden Ansprüche, bei welcher eine Werkzeugspindel (12a) stationär und die übrigen (12b-12f) verschieblich gelagert sind.

9. Vorrichtung (10) nach Anspruch 8, bei welcher eine äußerste (12a) der Werkzeugspindeln stationär gelagert ist.

10. Vorrichtung (10) nach Anspruch 8, bei welcher eine mittlere der Werkzeugspindeln stationär gehalten wird.

11. Vorrichtung (10) nach einem der vorangehenden Ansprüche, bei welcher vier Werkzeugspindeln vorhanden sind.

12. Vorrichtung (10) nach einem der vorangehenden Ansprüche, bei welcher sechs Werkzeugspindeln (12a-12f) vorhanden sind.

13. Vorrichtung (10) nach einem der vorangehenden Ansprüche, bei welcher acht Werkzeugspindeln vorhanden sind.

14. Vorrichtung (10) nach einem der vorangehenden Ansprüche, bei welcher zwölf Werkzeugspindeln vorhanden sind.

15. Vorrichtung (10) nach einem der vorangehenden Ansprüche, bei welcher die verschieblichen Werkzeugspindeln (12b-12f) auf jeweils einem Schlitten (20b-20f) gelagert sind.

16. Vorrichtung (10) nach einem der vorangehenden Ansprüche, bei welcher jede verschieblich gelagerte Werkzeugspindel (12b-12f) auf zwei Führungsschienen (16b-16f) verschieblich ist.

17. Vorrichtung (10) nach den Ansprüchen 15 und 16, bei welcher jeder Schlitten (20b-20f) auf jeweils zwei Führungsschienen (16b-16f) gelagert ist.

18. Vorrichtung (10) nach einem der vorangehenden Ansprüche, bei welcher die Werkzeugspindeln (12a-12f) als Einpress-Spindeln zum Einpressen von Ventilsitzringen (3) oder Ventilführungen in Zylinderköpfe (1) ausgestaltet sind.

19. Vorrichtung (10) nach Anspruch 1, bei welcher verschiedene Außengewindebereiche (24b-24f) der Verstellspindel (22) jeweils einer verschieblich gelagerten Werkzeugspindel (12b-12f) zugeordnet sind und die Außengewindebereiche (24b-24f) unterschiedliche Steigungen haben, die die gleichmäßige Verschiebung der Werkzeugspindeln (12b-12f) bewirken.

20. Vorrichtung (10) nach Anspruch 19, bei welcher die Außengewindebereiche (24b-24f) der Verstellspindel (22) mit Innengewinden von Schlitten (20b-20f) im Eingriff sind, an denen die verschieblichen Werkzeugspindeln (12b-12f) gelagert sind.
